(19)

Europäisches
Patentamt
European
Patent Office
Office européen
des brevets

(11) **EP 4 027 643 B1**

(12) **EUROPEAN PATENT SPECIFICATION**

(45) Date of publication and mention
of the grant of the patent:
**10.12.2025 Bulletin 2025/50**

(21) Application number: **22150618.1**

(22) Date of filing: **07.01.2022**

(51) International Patent Classification (IPC):
*H04N 19/147* (2014.01)    *H04N 19/115* (2014.01)
*H04N 19/176* (2014.01)    *H04N 19/19* (2014.01)

(52) Cooperative Patent Classification (CPC):
**H04N 19/147; H04N 19/115; H04N 19/176;**
H04N 19/19

(54) **SYSTEMS AND METHODS FOR COMPRESSION WITH CONSTRAINT**

SYSTEME UND VERFAHREN ZUR KOMPRESSION MIT BESCHRÄNKUNG

SYSTÈMES ET PROCÉDÉS DE COMPRESSION AVEC CONTRAINTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.01.2021 US 202163135462 P
20.04.2021 US 202117235870**

(43) Date of publication of application:
**13.07.2022 Bulletin 2022/28**

(73) Proprietor: **Samsung Display Co., Ltd.
Yongin-si, Gyeonggi-do 17113 (KR)**

(72) Inventor: **THIRUMALAI, Vijayaraghavan
Fremont, 94539 (US)**

(74) Representative: **Marks & Clerk LLP
15 Fetter Lane
London EC4A 1BW (GB)**

(56) References cited:
**WO-A1-2019/185992     WO-A1-97/43860
US-A1- 2004 131 121     US-A1- 2008 112 481
US-A1- 2017 206 821     US-A1- 2018 122 282
US-A1- 2018 191 371**

**Description**

FIELD

The present application generally relates to rate-distortion optimization, and more particularly to systems and methods for compression with constraint on maximum absolute error.

BACKGROUND

Compression techniques are often utilized to reduce memory requirements. However, with lossy compression, quality of the reconstructed data may be prone to errors and inconsistencies depending on the encoding and decoding techniques and other factors. Therefore, techniques that provide maximum compression while maintaining the best reconstructed quality is desired.

WO-A-97/43860 discloses a system and method for compressing data sets so compressed representations corresponding to a predetermined target file size are generated.

US-A-2018/0191371 discloses a data compression method of DeMura Table, a data decompression method of DeMura Table, and a Mura compensation method.

WO-A-2019/185992 discloses a method for decompressing images captured by a compressive imaging system in conjunction with a compressive imaging application. The method comprises determining an estimation error et based on a difference between: (i) a measurement y captured by the compressive imaging system and (ii) a product of a sensing matrix H and a signal xt that has been estimated. The method comprises determining a gradient descent st+1 based on a sum of: (i) the signal xt that has been estimated and (ii) a product of a step size $\mu$, a vector formulation of the sensing matrix HT and the estimation error et. The method comprises projecting the gradient descent st+1 comprising applying a compression function f and a decompression function g to estimate the signal xt+1. The method comprises iteratively repeating determining the estimation error et; determining the gradient descent st+1 and projecting the gradient descent st+1 to provide a reconstructed signal following a final iteration; and providing the reconstructed signal for display or storage.

SUMMARY

The invention provides a method for performing rate-distortion optimization as claimed in claim 1.

BRIEF DESCRIPTION OF THE DRAWINGS

FIG. 1 is a block diagram of an encoder and a decoder.
FIG. 2 is a block diagram of a mura compensation process
FIG. 3 is a block diagram of a mura compensation process with compression.
FIG. 4 is a block diagram of an encoder.
FIG. 5 illustrates a cost calculation technique according to a first method by the encoder, according to an embodiment.
FIG. 6 illustrates a process of determining a threshold value.
FIG. 7 is a block diagram of an encoder.
FIG. 8 illustrates a cost calculation technique according to an alternative method not in accordance with the inveniton.
FIG. 9 is a flow chart of a method for encoding compensation parameters.
FIG. 10 is a flow chart of a method for encoding compensation parameters.

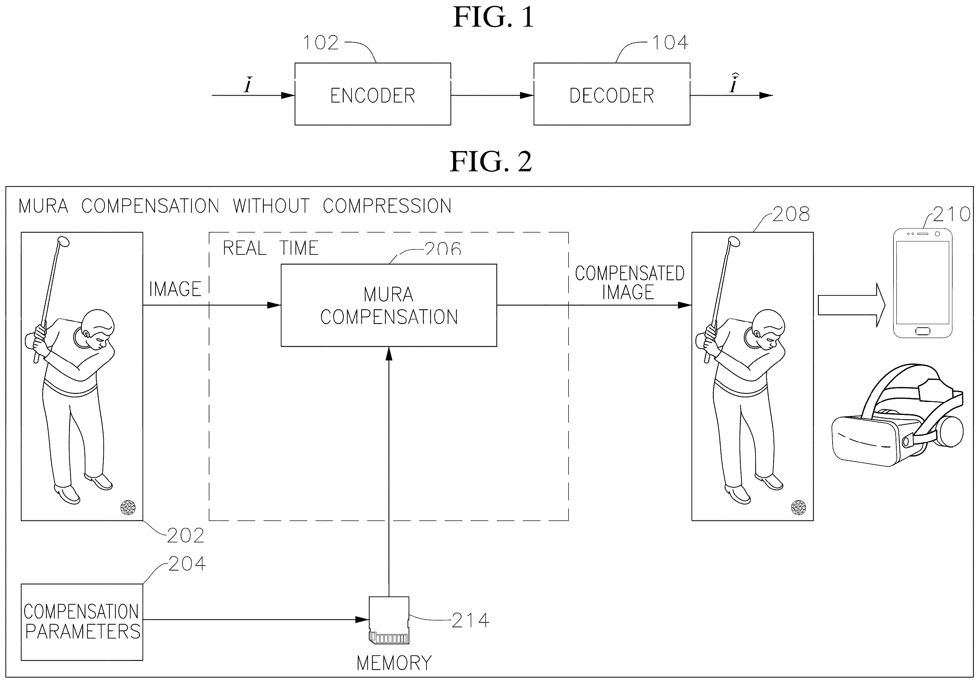

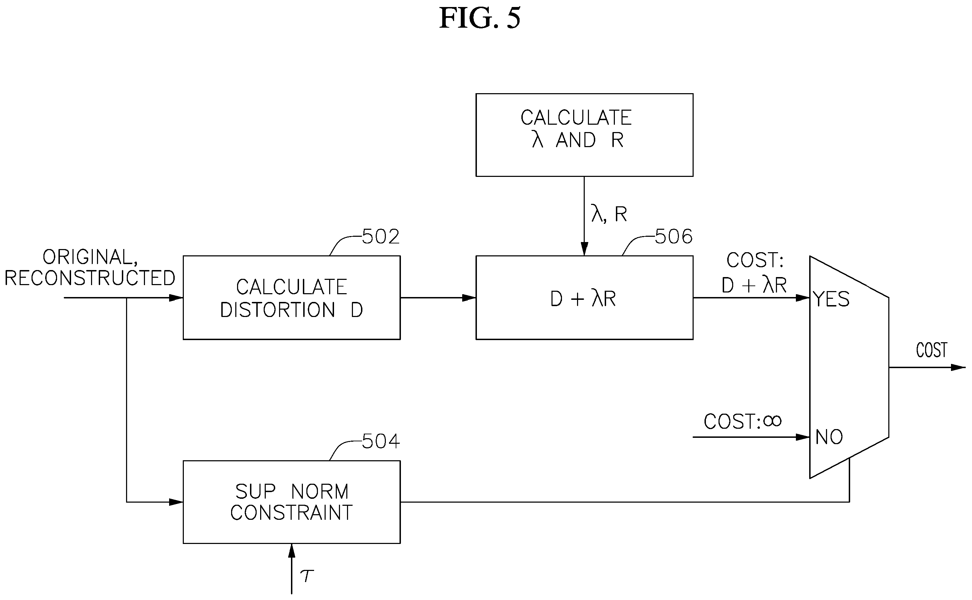

Embodiments of the present disclosure and their advantages are best understood by referring to the detailed description that follows. In particular, figures 1 to 6, 9 and 10 are useful to an understanding of the invention and are in accordance with the invention in so far as they use the cost calculation method of the embodiment described with reference ot Figure 5. The remaining figures relate to an alternative embodiment not in accordance with the invention. Unless otherwise noted, like reference numerals denote like elements throughout the attached drawings and the written description, and thus, descriptions thereof will not be repeated. In the drawings, the relative sizes of elements, layers, and regions may be exaggerated for clarity.

DETAILED DESCRIPTION

Hereinafter, example embodiments will be described in more detail with reference to the accompanying drawings. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described.

Systems and methods for reducing visible effects from compression on a reconstructed image are disclosed. FIG. 1 illustrates an example block of an encoder 102 and decoder 104. The encoder 102 receives an image ($I$), encodes the image, and outputs the encoded image to the decoder 104. The decoder 104 then generates a reconstructed version ($\hat{I}$) of the original image based on the encoded image.

Some optimization techniques may seek to generate a reconstructed version ($\hat{I}$) of the original image that minimizes an error (E) between the original image ($I$) and a reconstructed version ($\hat{I}$) of the original image using the following formulas:

$$\hat{I} = arg\ \min\left\|\left|E\right|\right\|_2^2 \qquad s.t.\ \ R \leq R_b$$

$$\hat{I} = arg\ min\ (D + \lambda\, R) \quad where\ D = \left\|\left|E\right|\right\|_2^2 \quad,$$

wherein: E is a difference between the original image ($I$) and the reconstructed version ($\hat{I}$) of the original image; $R_b$ is a bit budget (which may be based on compression ratio, available bandwidth between the encoder 102 and the decoder 104, a storage requirement, or a combination thereof ); R is an encoding rate of the encoder 102; D is a distortion between the original image and the reconstructed image; and $\lambda (\geq 0)$ is Lagrangian parameter which balances the distortion and the bit rate.

FIGS. 2-3 illustrate systems in which compensation parameters are applied to an original image to generate a compensated image. In the illustrated examples, the goal of generating the compensated image is to reduce mura defects with which displays may be prone to unless corrected. However, compensation techniques can be utilized in display devices to reduce other visual imperfections (e.g., ghosting, etc.).

Display devices are often prone to mura defects because while transistors and various electronic components that make up the pixels of the displays are manufactured according to closely inspected specifications within set manufacturing tolerances, no two components have an exact identical relationship. For example, the voltage-current relationships of two transistors in the display may differ slightly such that, responsive to a particular input code (e.g., input voltage), one pixel may turn on with a luminance corresponding to a grayscale value of 128, whereas another pixel may turn on with a luminance corresponding to a grayscale value of 127, while another pixel may turn on with a luminance corresponding to a grayscale value of 130, and so on. Moreover, these differences may vary from one display device to another. In other words, no two display devices are exactly the same. Accordingly, mura compensation techniques may be implemented to compensate for this visual impairment in display devices so that the pixel in every display device will behave more consistently (e.g., always turning on with a luminance corresponding grayscale value of 128).

In some embodiments, mura defects may be compensated by applying compensation parameters to an image to be displayed. A display device may adjust input values (e.g., input voltages, input codes, etc.) supplied to pixels of the display device based on the compensation parameter in order to achieve reduced mura defects. Because the compensation parameters are static parameters, the parameters may be determined and implemented during manufacturing of the display device, for example at the factory.

Accordingly, FIG. 2 illustrates a block diagram of an example mura compensation technique. According to an embodiment, an image 202 that is to be displayed on a display device 210 is compensated by applying compensation parameters 204 to an original image at the mura compensation block 206. The compensation parameters 204 are display dependent so the parameters are calculated specifically for each display device 210 and stored in memory 214. When the image 202 is to be displayed on the display device 210, the compensation parameters 204 may be retrieved from the memory 214 and applied to the image in real time to compensate for the mura defects.

However, the compensation parameters 204 can be memory intensive and take up a lot of memory space. Thus, in some embodiments, the compensation parameters 204 may be compressed and then stored in a memory to reduce the amount of memory needed to store the compensation parameters.

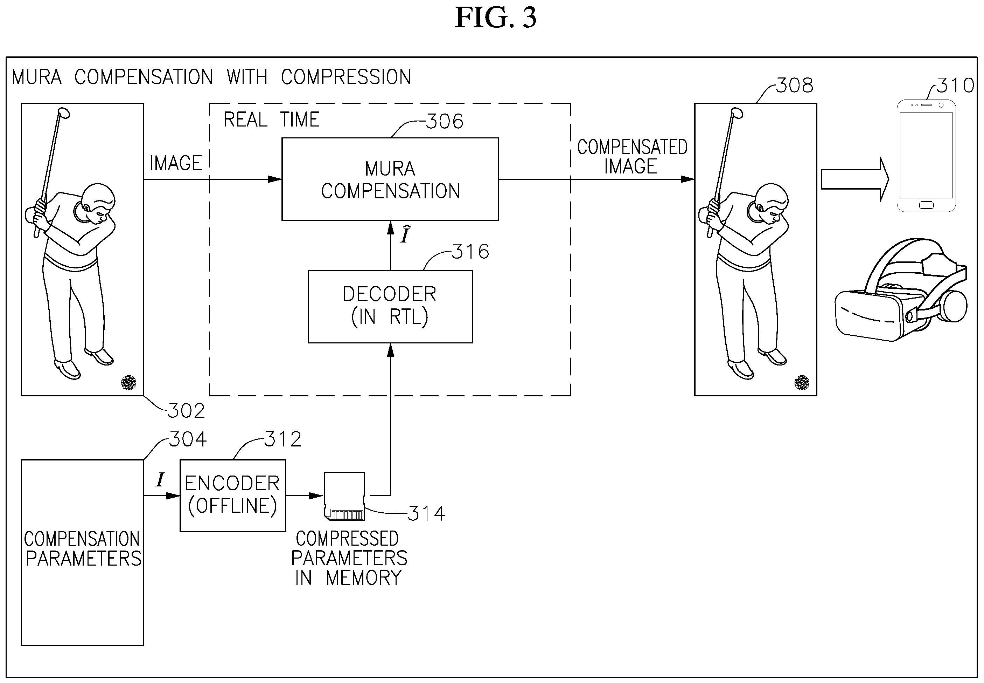

FIG. 3 illustrates a block diagram of an example mura compensation technique where the compensation parameters are compressed, according to an embodiment. Similar to FIG. 2, an image 302 that is to be displayed on a display device 310 is compensated by applying compensation parameters 304 at the mura compensation block 306 to compensate for mura defects. But differently from FIG. 2, the compensation parameters 304 are compressed by an encoder 312, the compressed compensation parameters are stored in a memory 314, and the compressed parameters stored in the memory 314 are decompressed by a decoder 316 before the mura compensation 306 takes place. Finally, the mura compensated image 308 may be displayed on the display device 310. In some embodiments, the encoder 312 and the decoder 316 may implement a transform-based low complexity codec (TLC), but is not limited thereto, and other encoding/decoding techniques may be implemented.

The embodiments of the present disclosure will be directed to rate distortion optimization techniques for the compensation parameters 304. According to an embodiment, the compensation parameters 304 may be represented as data $I$, and data $I$ may be encoded (e.g., compressed) by the encoder 312. The encoding may be performed offline, e.g., during the manufacturing of the display device 310 in a factory. Thus, in some embodiments, the encoding is performed just one time when the display device 310 is manufactured. In other embodiments, the encoding may be performed on an existing device, for example, during a configuration process initiated by an end user. Once the compensation parameters 304 represented by data $I$ are compressed, the compressed data $I$ may be stored in the memory 314, for example an onboard memory in the display device 310. During operation, the encoder 312 is not utilized because the encoded compensation parameters 304 are already stored in the memory 314.

In some embodiments, by encoding, thus compressing the data $I$, the size of the encoded parameters may be reduced thereby reducing the memory requirements or the amount of memory 314 needed to store such encoded parameters. In some embodiments, the memory requirements may be reduced by four times or eight times.

In some embodiments, the encoded parameters may be retrieved from the memory 314 and decoded by the decoder 316 (e.g., decompressed) such that a reconstructed version ($\hat{I}$) of the data may be provided to the mura compensation block 306. In some embodiments, the decoder 316 may be implemented in a hardware such as, for example field-programmable gate logic (FPGA) or application specific integrated circuit (ASIC). Yet in other embodiments, the decoder 316 may be implemented by programming software.

Rate distortion optimization of compensation parameters corresponding to an image is different from rate distortion optimization of an image. For example, when decoding an encoded image (e.g., a video image), the decoded image, which is a reconstructed version of the original image, is shown to an end user (e.g., on the display). Thus, when performing rate distortion optimization in the case of a reconstructed image, it may be desirable to increase (e.g., maximize) the peak signal to noise ratio (PSNR) to reduce or minimize the mean squared error, for example, as is typically done in video coding formats such as MPEG.

On the other hand, when decoding encoded compensation parameters (e.g., to compensate for mura defects), the decoded data, which is a reconstructed version of the original compensation parameter data, is not shown to the end user because the reconstructed data is just parameters (e.g., offsets) that are used for mura defect compensation. Instead, the end user sees an image that is compensated by the reconstructed compensation parameters. Therefore, when performing rate distortion optimization in the case of reconstructed compensation parameters, increasing (e.g., maximizing) the PSNR alone may not provide the best results (e.g., the best reconstructed compensation parameters). Therefore, according to an embodiment, in addition to increasing (e.g., maximizing) the PSNR, techniques to reduce (e.g., minimize) an error between the original compensation parameters and the reconstructed version of the compensation parameters may be implemented, thereby reducing a maximum absolute error. Hereinafter, the compensation parameters may also be referred to as "data."

In some embodiments, methods for optimizing a framework to reduce the maximum absolute error is described without sacrificing (e.g., while increasing) the PSNR. In some embodiments, methods to reduce the maximum absolute error is determined without increasing the amount of time it takes to encode the data.

In some embodiments, systems and methods are described to include a supremum norm in the rate distortion optimization to reduce the maximum absolute error ($\|E\|_\infty$). The disclosed systems and methods identify a reconstructed version ($\hat{I}$) of the original data according to the following equation:

$$\hat{I} = arg \, \min \left\| |E| \right\|_2^2 \qquad s.t. \ R \le R_b, \left\| |E| \right\|_\infty \le \tau$$

where $\tau$ is a threshold and $\|E\|_\infty$ is a supremum norm of error between the original data ($I$) and the reconstructed version ($\hat{I}$) of the original data.

In some embodiments, a modified constrained problem with Lagrangian parameter $\lambda$ may be used:

$$\hat{I} = arg \, \min \, (D + \lambda R), \ s.t. \ \left\| |E| \right\|_\infty \le \tau \text{ where } D = \left\| |E| \right\|_2^2$$

wherein the cost, $D + \lambda R$, is set to $D + \lambda R = \infty$ when $\tau > \|E\|_\infty$. Here, $\tau > \|E\|_\infty$ is the supremum norm constraint. In yet another embodiment, the distortion may be calcuated based on a sum of absolute difference such that:

$$\hat{I} = arg \, \min \, (D + \lambda R), \ s.t. \ \left\| |E| \right\|_\infty \le \tau \text{ where } D = \left\| |E| \right\|_1$$

Embodiments of the present disclosure provide two methods for enforcing the supremum norm constraint by determining $\tau$.

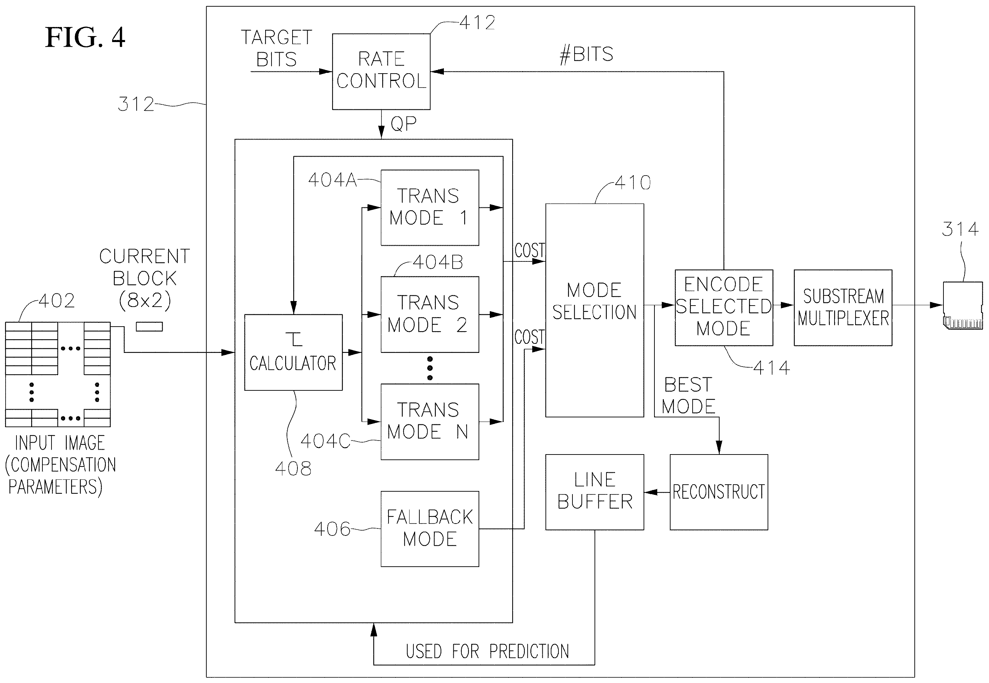

FIG. 4 is a block diagram of an example encoder 312 illustrated in FIG. 3. According to an embodiment, the encoder 312 is configured to take compensation parameters corresponding to each block of an image 402 and encode it according to one of several possible modes (e.g., transform modes), based on a first cost calculation method (e.g., rate distortion optimization), which will be described in more detail with reference to FIG. 5.

In some embodiments, the encoder 312 includes a $\tau$ calculator 408 that provides a threshold input value $\tau$ to the two or more transform modes 404A-404C and a fallback mode 406. The outputs from the transform modes 404A-404C and the fallback mode 406 are provided to a mode selection 410 where one of the cost outputs from the transform modes 404A-404C and the fallback mode 406 is selected. In some embodiments, the $\tau$ calculator 408 sets the threshold value $\tau$ that is applied to the transform modes 404A-404C, which will be used to determine whether the cost passes or fails (e.g., whether a constraint enforced by the supremum norm of error is less than or equal to the threshold value $\tau$). Consequently, when a threshold value $\tau$ is found that satisfies (i.e., passes) the constraints for one of the modes, the mode selection 410 selects the mode (e.g., one of the transform modes 404A-404C) with the lowest cost. On the other hand, if a threshold value $\tau$ does not satisfy (i.e., fails) the constraints for the modes, then feedback may be provided to the $\tau$ calculator 408 to select another $\tau$ value (e.g., the next higher value), and then provide the updated $\tau$ value to the transform modes 404A-404C to determine whether the updated $\tau$ value satisfies the constraints for at least one of the modes. That mode that satisfies the constraint may be selected, in the case where multiple modes satisfy the constraint, then the mode with the lowest cost may be selected. In some embodiments, if no $\tau$ values, including the updated $\tau$ values, satisfies the constraints, then the mode selection 410 may select the fallback mode 406.

In some embodiments, the encoder 312 includes a plurality of transform modes 404A-404C that may perform a spatial intra prediction of the compensation parameters corresponding to a block of the image 402. According to one example, a vertical intra prediction mode may be performed. In another example, a horizontal intra prediction mode may be performed. Accordingly, different prediction of the compensation parameters may be generated from each of the different transform modes. The original compensation parameter may then be subtracted from the prediction by each of the transform modes to generate a residue. After generating the residue, a discrete cosine transform (DCT) may be performed such as the one used in JPEG or H.264. In another embodiment, a discrete sine transform (DST) may be performed such as the one used in HEVC. After applying the transform, the current block is quantized using a quantization parameter, and a coding rate to represent the quantized coefficients is calculated.

In some embodiments, an encoder may include two or more transform modes, such as for example, eight transform modes 404A-404C as shown in FIG. 4. Accordingly, the current block may be approximated or reconstructed in eight different ways by the eight different transform modes 404A-404C and the transform mode that generates the best output, based on the distortion between the original and the approximated/reconstructed block, rate (e.g., amount of bits used to represent the quantized transform coefficients), and the threshold value $\tau$, may be selected by the mode selection 410. Moreover, the selected transform mode may vary from block to block of the image 402. Thus, in one example, transform mode 1 404A may best approximate the first block but transform mode 2 404B may best approximate the second block, and so on. In some embodiments, the desirable residue may be the one that gives the smallest distortion, the smallest rate, and the smallest $\tau$ or a combination thereof.

In some embodiments, a fallback mode 406 may have fixed rate compression and may be utilized when the transform modes 404A-404C is expensive or the encoder is about to run out of bits. In the fallback mode 406, an upfront memory size may be fixed and therefore the compensation parameters may be compressed to fit into the fixed memory size. Therefore, exceeding the memory capacity even by one bit may result with an inability to decode (e.g., reconstruct) the compensation parameters thus, completely losing the compensation parameters. Thus, using the fallback mode 406 is generally reserved for edgy cases or corner cases.

In some embodiments, the mode selection 410 selects the best transform mode that increases (e.g., maximizes) the PSNR or reduces (e.g., minimizes) the supremum norm error for compensation parameters corresponding to each block of the image 402. In the example encoder 312 illustrated in FIG. 4, the mode selection 410 selects either one of the transform modes 404A-404C or the fallback mode 406. As described earlier, because the probability of the fallback mode 406 being used is very small (e.g., about 0.001% of the time), and because it is reserved mostly for edgy or corner cases, the mode selection 410 will select the transform mode 404 most of the time (e.g., about 99.999% of the time). Additionally, a bit budget may be calculated in the mode selection 410 to determine the fixed rate.

In some embodiments, the encoder 312 may include a rate controller 412. Target bits and a bit budget may be provided as inputs to the rate controller 412 and depending on how far the encoding rate is from the target bits, the rate controller 412 may calculate a quantization parameter (QP). The QP may then be provided to the modes (e.g., the transform modes 404A-404C or the fallback mode 406). Finally, the compensation parameters may be encoded at an encoding block 414 and then stored in the memory 314.

In some encoding schemes, such as for example, VESA Display Compensation Mobile (VDC-M), the transform mode is used to encode a particular type of visual information, for example, using a transform mode to encode natural contents, or using a block prediction mode to encode screen content and synthetic patterns. In some embodiments, the fallback mode is used when the transform mode is expensive or an encoder is about to run out of bits.

In some embodiments, the supremum norm of error constraint is evaluated only in regular modes such as transform modes and block prediction modes. This is because fallback modes are used very rarely and when a fallback mode is used, the fallback mode typically has high distortion and at least one fallback mode is available per block.

FIG. 5 illustrates a cost calculation technique according to the invention by the encoder 312 illustrated in FIG. 4. More particularly, it illustrates the cost calculation performed by the transform modes 404A-404C of the encoder 312. Here, both the original and reconstructed data is used to calculate distortion D at block 502, and the cost associated with a particular reconstructed version ($\hat{I}$) of the original data is based on an encoding rate associated with the particular reconstructed version ($\hat{I}$) of the original data, and a distortion between the original data ($I$) and the particular reconstructed version ($\hat{I}$) of the original data. That is, cost may be calculated as the distortion D and $\lambda$ times the rate R. $\lambda$ may be computed, for example, according to one or more techniques known in the art:

$$\lambda = \alpha * 2^{((QP - \beta)/\gamma)} \text{ e.g., } \alpha = 0.852, \beta = 12, \gamma = 3$$

as described in Iain E. Richardson. 2010. The H.264 Advanced Video Compression Standard (2nd. ed.). Wiley Publishing, or

$$\lambda = a * 2^{\left(\frac{(BR * b) - c}{d}\right)}, \text{ where } BR = \frac{R}{maxBits}$$

as described in U.S. Patent No. 9,866,853, "System and method for Lagrangian parameter calculation for display stream compression (DSC)." Here, a, b, c and d are constants; R is the coding rate of the current block; and maxBits is the maximum bits to represent the current block. In some embodiments, the reconstructed data is generated based on encoding and then decoding the original data using the encoding technique selected by the mode selection 410 from the transform modes 404A-404C or the fallback mode 406 in the encoder 312 of FIG. 4.

However, according to an embodiment of the present disclosure, an additional constraint is incorporated into the cost, which enforces that the supremum norm of error between the original data and the particular reconstructed version of the original data is less than or equal to a threshold value $\tau$. In some embodiments, the supremum norm may be determined at the supremum norm block 504, by taking the absolute difference of the error and then taking the maximum value of the absolute difference. If the supremum norm is less than or equal to $\tau$, which may be provided from a $\tau$ calculator 408, then the current cost is accepted as D + $\lambda$R. If the supremum norm of error is greater than $\tau$, then the cost of the selected transform mode is set to infinity and therefore the transform mode is not used to encode the data for that particular value of $\tau$. However, as explained above with reference to FIG. 4, if the current value of $\tau$ does not satisfy the constraint, then feedback may be provided to the $\tau$ calculator 408 to get a different $\tau$ value (e.g., the next higher $\tau$ value) and determine whether this $\tau$ value will satisfy the constraint. If it does not, then this process may be repeated until a $\tau$ value that satisfies the constraints is found. If multiple $\tau$ values are determined to satisfy the constraint, then the $\tau$ value that generates that lowest cost may be selected. On the other hand, if no $\tau$ values satisfy the constraint and no more $\tau$ values are left to be selected by the $\tau$ calculator 408, then the cost is set to infinity. Consequently, the current reconstruction version of the data is rejected for all transform modes. Thus, the first method provides a method of hard enforcement (e.g., a binary decision of accepting or rejecting) of the maximum absolute error by setting the cost of a coding method to infinity in response to the maximum absolute error associated with using the coding method exceeding a threshold $\tau$. When this occurs, the fallback mode may be selected.

Techniques for determining the value for $\tau$ will be described. In some embodiments, a brute force approach may be used to determine $\tau$. For example, the smallest threshold value $\tau$ from a search window $S = \{ 1, 2, 3, ...T\}$ may be determined that satisfies the supremum norm of error constraints for at least one of the transform modes 404A-404C, where:

$$\hat{I} = arg \min \left\|E\right\|_2^2 \quad s.t. \quad R \leq R_b, \quad \left\|E\right\|_\infty \leq \tau.$$

In other words, a search window S may be set, for example, from 1 to T, where 1 is a predetermined lower bound of the search window S, T is a predetermined upper bound of the search window S, and the values of the search window S are provided in an ascending order. The objective is to find a threshold value $\tau$ from the search window S that satisfies the supremum norm of error constraint. Thus, the threshold value $\tau$ may be the smallest value in the search window S (e.g., 1 in this case) and the cost (e.g., rate distortion optimization) may be calculated for each transform mode (e.g., transform modes 404A-404C in FIG. 4). If the constraint $\|E\|_{\infty} \le \tau$ is not satisfied, then the next smallest value from S may be selected (e.g., 2 in this case) and the rate distortion optimization may be calculated. This process may be repeated for each block until a threshold value $\tau$ is determined for each block that meets all the constraints in the cost equation. In some embodiments, if every $\tau$ value fails to satisfy the constraints, then the fallback mode 406, that does not rely on a $\tau$ value may be selected.

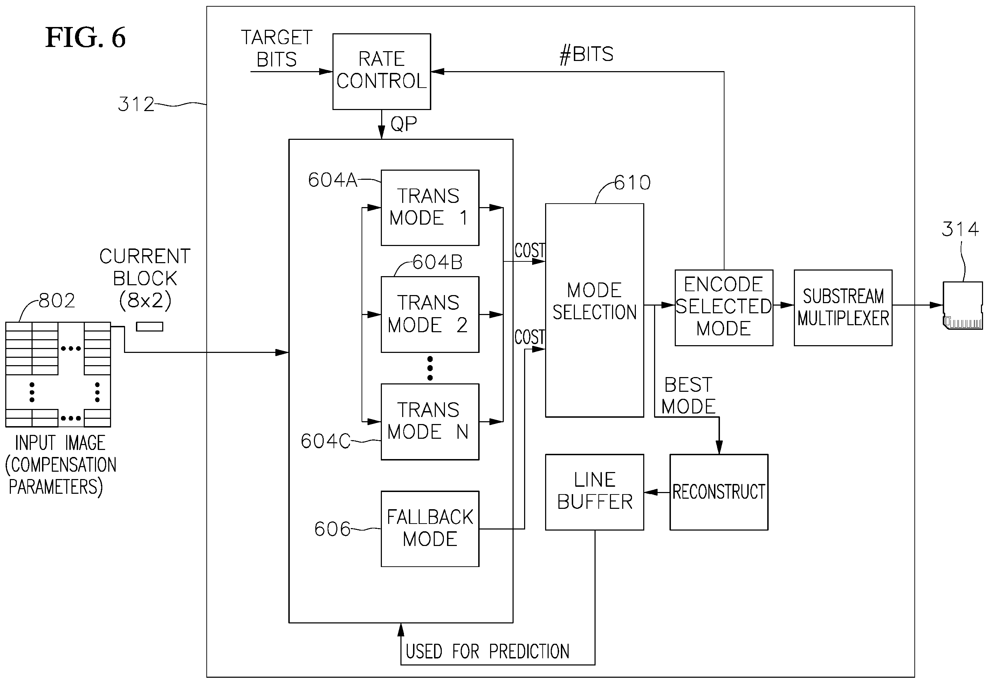

FIG. 6 illustrates an example of an image frame that is divided into a plurality of blocks, for example, N x M blocks, and corresponding compensation parameters may be applied to each block of the image to correct for mura defects. In some embodiments, each block may comprise several pixels, for example, 16 pixels arranged in 2 rows and 8 columns. In other embodiments, each block may have more or fewer pixels. Thus, according to an example display that uses an RGB arrangement, each of the red, green, and blue blocks includes 16 pixels of red, green, and blue sub-pixels. In another embodiment that uses an RGBG arrangement (e.g., PENTILE® arrangement), each of the red and blue block include 8 sub-pixels of red and blue pixels, and the green block includes 16 pixels of green sub-pixels.

In some embodiments, brute force search may be performed for the compensation parameters for the blocks to determine the threshold value $\tau$ for the rate distortion optimization. According to an embodiment, the threshold value $\tau$ is set to the smallest value from the search window S (e.g., 1) and the rate distortion optimization is solved for the first block according to the encoding techniques described above with reference to FIG. 4, where the best encoding solution is selected. Here, the first block is the uppermost left block. If the supremum norm of error is less than the threshold value $\tau$, which is 1 in this example, based on the selected encoding technique (e.g., one of the transform modes 404A-404C), then the first block passes and the cost for that block for the selected mode is D + $\lambda$R, and we move on to the next block. While the cost may pass for this threshold value $\tau$ at the selected mode, the cost may fail with the same threshold value with a different mode, in which case the cost may be infinity instead of D + $\lambda$R. Thus, the mode that best satisfies the constraint (e.g., also based on the smaller rate, smallest distortion, and smallest $\tau$) may be selected.

The next block is the block right to the first block. The computation is repeated at this block and if the supremum norm of error is less than and equal to 1, then this block also passes, and the cost for this block is also D + $\lambda$R. Accordingly, this process is repeated for all of the blocks in a sequential order, from left to right, and then left to right in the next row below, and so on, until a block is reached where this computation fails to satisfy the constraints. That is, the supremum norm of error is greater than the threshold value $\tau$ (e.g., 1). Here, in the image frame 802, block 808 has failed. Therefore, the threshold value $\tau$ is set to the next smallest value from the search window S, for example, 2 in this case, and the rate distortion optimization equation is solved again starting from the first block at the top left, based on the brute force approach. Thus, the lower bound of the search window value may correspond to the threshold value $\tau$ of the previous block of the image frame. In some embodiments, the computation performed for each block includes a cost computation for each transform mode in the encoder. Thus, when the computation is said to fail for a block, all transform modes have failed.

However, the brute force approach may be inefficient, by recomputing the rate distortion optimization equation from the beginning. According to a more efficient approach, the rate distortion optimization equation does not have to be solved for the earlier blocks because those blocks have already passed with threshold value $\tau$ = 1. Thus, we know that those blocks will pass with larger threshold values (e.g., when $\tau$ = 2). Therefore, the rate distortion optimization equation may be solved using the larger threshold value $\tau$ = 2 starting at block 808, which is where the failure occurred when the smaller threshold value $\tau$ = 1 was used.

In this manner, the threshold value $\tau$ may be determined more efficiently according to the efficient approach. Accordingly, with threshold value $\tau$ = 2, the rate distortion optimization equation may be solved starting with block 808, and if this block passes, the next block is solved, and so on, until we reach a block where the supremum norm of error is greater than 2, and therefore fails. Here, the threshold value of $\tau$ = 2 fails at block 810, as shown in image frame 804. Therefore, the threshold value $\tau$ is set to the next smallest value from the search window S, for example, 3 in this case, and the rate distortion optimization equation is solved starting with block 810, and if this block passes, the equation is solved for the next block, and so on until all of the blocks pass as shown in image frame 806. Thus, in this example, the threshold value $\tau$ may be set to 3.

In some embodiments, it may not be efficient to start the search by setting $\tau$ equal to the smallest search window value (e.g., lower bound of S, which is $\tau$ = 1) if it is known that the smaller search window value will not pass all of the blocks. Accordingly, a binary search approach may be performed where the initial value for $\tau$ may be set to a higher value, for example, a value that is somewhere in the middle of the lower bound of the search window value and the upper bound of search window value (e.g., midpoint of the search window S), knowing that the smaller threshold value $\tau$ will fail at some point. For example, if the search window S = {1, 2, 3, 4, 5, ..., 100}, then the first threshold value $\tau$ may be set to start with 50. If $\tau$ = 50 passes, then the lower half of the search window S may be split, for example, by selecting $\tau$ = 25, which is a value between 1 and 50 (i.e., lower half). On the other hand, if $\tau$ = 50 fails, then the upper half of the search window S may be split, for example, by selecting $\tau$ = 75, which is a value between 50 and 100 (i.e., upper half). This process may be repeated until a $\tau$ value that passes is determined. Accordingly, time may be saved by not having to compute using every threshold value $\tau$ in the search window S, thereby improving the overall efficiency.

Accordingly, while the brute for approach is the simplest, it is not the most efficient, whereas the efficient approach and the binary search approach are more complex but are more efficient. For example, a display that has 1920 by 1080 pixel has approximately 129,600 blocks (or 2,073,600 pixels where each block has 2 rows by 8 columns of pixels). The complexity may be analyzed as a cardinality of search window S times the number of blocks (e.g., |S|*B = |S|*(N x M)), where S is the cardinality of the search window, B is the number of blocks, N is the number of rows of blocks, and M is the number of columns of blocks. Therefore, the complexity of the efficient approach may be represented as O(B+|S|*B) but because the cardinality of the search window S is much less than B (e.g., |S|<<B), then O(B+|S|*B) = O(B) = O(N*M). Therefore, the complexity of the search may be substantially reduced to just O(N*M). On the other hand, the complexity of the brute force method is O(|S|*N*M), and the complexity of the binary search method is O(log2(|S|*N*M)).

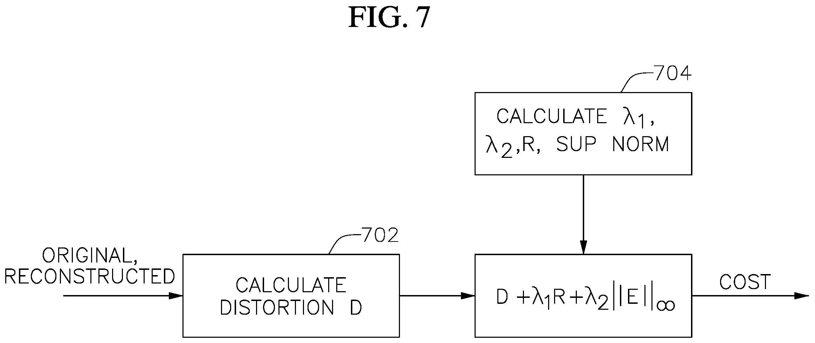

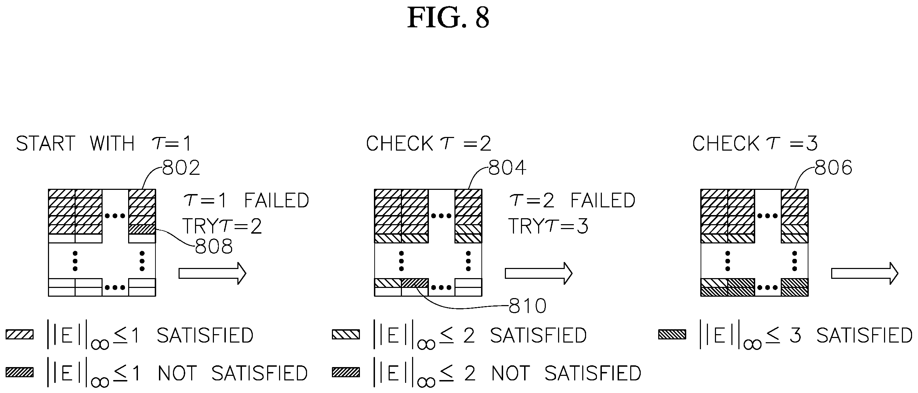

FIG. 7 is a block diagram of an encoder that is similar to the encoder 312 in FIG. 4 but does not include the $\tau$ calculator, and may be utilized for encoding the compensation parameters according to an alternative method where the cost calculation includes the rate, distortion, and a supremum norm constraint, which will be described in more detail with reference to FIG. 8, and not in accordance with the claimed invention. In some embodiments, the encoder includes two or more transform modes 604A-604C, similar to FIG. 4, where each transform mode may be configured to perform a spatial intra prediction of the compensation parameters corresponding to a block of the image 802. According to one example, a vertical intra prediction mode may be performed. In another example, a horizontal intra prediction mode may be performed. Accordingly, different prediction of the compensation parameters may be generated from each of the different transform modes. The original compensation parameter may then be subtracted from the prediction by each of the transform modes to generate a residue. After generating the residue, DCT or DST may be performed. After applying the transform the current block may be quantized using a quantization parameter and a coding rate to represent the quantized coefficients is calculated. Accordingly, a different prediction of the compensation parameters may be generated from each of the different transform modes and the cost may be calculated for each transform mode. The remaining blocks are substantially the same as those described with reference to FIG. 4 and will not be repeated here.

FIG. 8 illustrates another cost calculation technique according to a second method by the encoder illustrated in FIG. 7. More particularly, it illustrates the cost calculation performed by the transform modes 604A-604C of the encoder. The example encoder illustrated in FIG. 7 may include two or more units (e.g., eight units) of the cost calculation transform mode 604A-604C to perform the two or more cost calculations to select the best result. In some embodiments, the second method of determining the cost is provided by using two constraints, $\lambda_1$ and $\lambda_2$, and then converting the constraints to an unconstrained problem using the following equations:

$$\hat{I} = arg \min \left(D + \lambda_1 R + \lambda_2 \left\|\mathrm{E}\right\|_\infty\right), \ \text{where } D = \left\|E\right\|_2^2$$

Here, $\lambda_1$ may be dependent on a quantization parameter or it may be computed using the same techniques for calculating $\lambda$ as described above with reference to the first method. $\lambda_2$ may be computed through trial and error based on empirical or analytical error, and therefore may be an estimated value. For example, $\lambda_2$ may depend on a quantization parameter, and may be determined from an exponential equation wherein the $\lambda_2$ values are different from the values computed for $\lambda_1$. In some embodiments, $\lambda_2$ may depend on infinity norm ($\|E\|_\infty$). Thus, rate R and the supremum norm of error may be balanced using $\lambda_1$ and $\lambda_2$ to determine the cost according to the second method. As illustrated in FIG. 8, the reconstructed version of the original data may be provided to distortion calculator 702 to calculate distortion D. Here, the reconstructed version of the original data may be generated based on encoding and then decoding the original data using to the encoding technique selected by mode selection 610 from the transform modes 604A-604C in the encoder of FIG. 7. $\lambda_1$ and $\lambda_2$ may be calculated at block 704 as described above, and the cost may be estimated in this manner. Therefore, because the absolute error is incorporated into the cost, the encoding with the lowest cost may have a reduced absolute error.

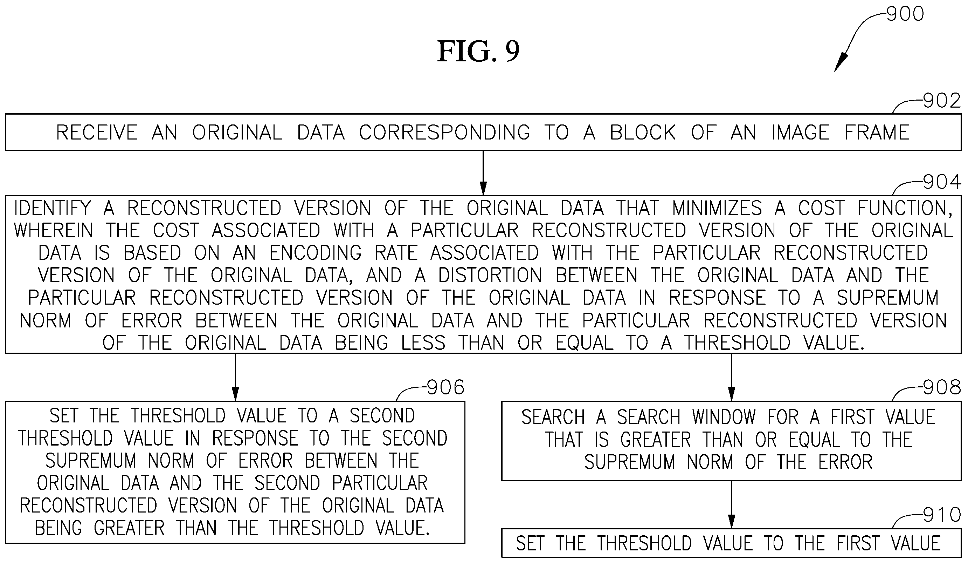

FIG. 9 is a flow chart of a method for encoding compensation parameters, according to an embodiment (900). According to the example embodiment, a method for performing rate-distortion optimization is described. The method may include receiving an original data (I) corresponding to a block of an image frame (902). In some embodiments, the method may further include identifying a reconstructed version ($\hat{I}$) of the original data that minimizes a cost function (904). The cost may be associated with a particular reconstructed version of the original data, and may be based on an encoding rate (R) that is associated with the particular reconstructed version of the original data, and a distortion (D) between the original data and the particular reconstructed version of the original data in response to a supremum norm of error between the original data and the particular reconstructed version of the original data being less than or equal to a threshold value ($\tau$). In some embodiments, the method may further set the threshold value to a second threshold value in response to the second supremum norm of error between the original data and the second particular reconstructed version of the original data being greater than the threshold value (906). In some embodiments, the method may further search a search window (S) for a first value that is greater than or equal to the supremum norm of the error (908), and then set the threshold value to the first value (910).

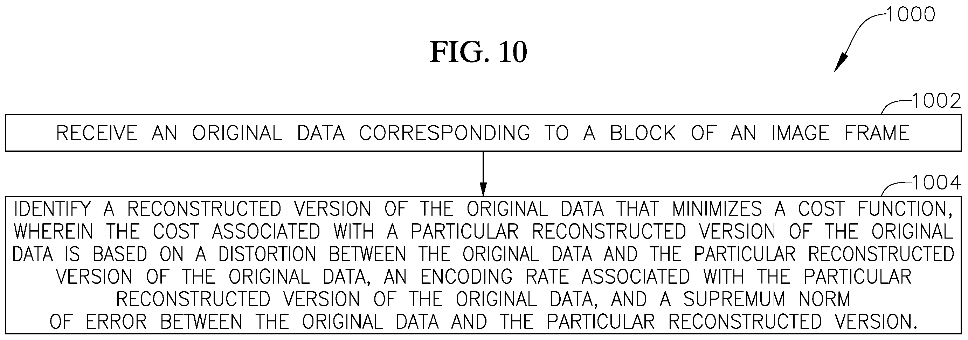

FIG. 10 is a flow chart of a method for encoding compensation parameters, according to another embodiment (1000). According to the example embodiment, another method for performing rate-distortion optimization is described. The method may include receiving an original data (*I*) corresponding to a block of an image frame (1002). In some embodiments, the method may further include identifying a reconstructed version ($\hat{I}$) of the original data that minimizes a cost function (1004). The cost may be associated with a particular reconstructed version of the original data, and may be based on a distortion (*D*) between the original data and the particular reconstructed version of the original data, an encoding rate (*R*) associated with the particular reconstructed version of the original data, and a supremum norm of error between the original data and the particular reconstructed version.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present invention.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present invention. As used herein, the singular forms "a" and "an" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

As used herein, the terms "substantially," "about," and similar terms are used as terms of approximation and not as terms of degree, and are intended to account for the inherent deviations in measured or calculated values that would be recognized by those of ordinary skill in the art. Further, the use of "may" when describing embodiments of the present invention refers to "one or more embodiments of the present invention." As used herein, the terms "use," "using," and "used" may be considered synonymous with the terms "utilize," "utilizing," and "utilized," respectively.

The electronic or electric devices and/or any other relevant devices or components according to embodiments of the present invention described herein may be implemented utilizing any suitable hardware, firmware (e.g. an application-specific integrated circuit, or a field-programmable gate array), software, or a combination of software, firmware, and/or hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the example embodiments of the present invention.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Embodiments described herein are examples only. One skilled in the art may recognize various alternative embodiments from those specifically disclosed. Those alternative embodiments are also intended to be within the scope of this disclosure. As such, the embodiments are limited only by the following claims.

**Claims**

1. A method (1000) for performing rate-distortion optimization of image compensation parameters, the compensation parameters being utilized to reduce visual imperfections in a display device, the method comprising:

   receiving, as an original data, compensation parameters corresponding to a block of an image frame (1002); and
   identifying a reconstructed version of the original data that minimizes a cost function,
   wherein a cost associated with a particular reconstructed version of the original data is based on a distortion between the original data and the particular reconstructed version of the original data, an encoding rate associated with the particular reconstructed version of the original data, and a supremum norm of error between the original data and the reconstructed version (1004),
   wherein when the supremum norm of error between the original data and the reconstructed version is greater than a threshold value, the cost associated with the particular reconstructed version of the original data is set to infinity.

2. The method (1000) of claim 1, wherein the cost associated with the particular reconstructed version of the original data is a sum of the distortion, and a product of a first Lagrangian parameter and the encoding rate, and a product of a second Lagrangian parameter and the supremum norm of error between the original data and particular reconstructed version of the original data.

3. A method (1000) for performing rate-distortion optimization as claimed in claim 1,
   wherein when the supremum norm of error between the original data and the particular reconstructed version of the original data is less than or equal to the threshold value thefirstcost associated with the particular reconstructed version of the original data is based on the encoding rate associated with the particular reconstructed version of the original data, and the distortion between the original data and the particular reconstructed version of the original data.

4. The method (1000) of claim 3, wherein the cost associated with the particular reconstructed version of the original data is a sum of the distortion and product of a Lagrangian parameter and the encoding rate.

5. The method (1000) of any one of claims 3 or 4, further comprising setting the threshold value by:

   searching a search window for a first value that is greater than or equal to the supremum norm of the error, the search window comprising consecutive series of values in ascending order and having a lower and upper bound; and
   setting the threshold value to the first value.

6. The method (1000) of claim 5, wherein the first value is greater than a lower bound of the search window, further optionally, wherein the lower bound of the search window corresponds to a threshold value of a previous block of the image frame.

7. The method (1000) of any one of claims 3 to 6, wherein the supremum norm of error between the original data and the particular reconstructed version of the original data being less than or equal to the threshold value reduces a maximum absolute error of the particular reconstructed version of the original data.

8. An encoder system comprising:

   a memory storing computer-executable instructions; and
   a processor configured to execute the instructions that cause the system to perform operations comprising:

      receiving an original data corresponding to a block of an image frame;
      identifying a reconstructed version of the original data that minimizes a cost function; and
      wherein a cost associated with a particular reconstructed version of the original data is based on an encoding rate associated with the particular reconstructed version of the original data, a distortion between the original data and the particular reconstructed version of the original data, and a supremum norm of error between the original data and the particular reconstructed version,
wherein when the supremum norm of error between the original data and the reconstructed version is greater than a threshold value, the cost associated with the particular reconstructed version of the original data is set to infinity.

9. The system of claim 8, wherein the cost associated with the particular reconstructed version of the original data is a sum of the distortion, and product of a Lagrangian parameter and the encoding rate.

10. The system of any one of claims 8 or 9, further comprising a threshold calculator, wherein the processor is further configured to execute the instructions and cause the threshold calculator to determine the threshold value.

11. The system of claim 10, wherein the threshold calculator is further configured to determine the threshold value by:

searching a search window for a first value that is greater than or equal to the supremum norm of the error, the search window comprising a plurality of values in ascending order and having a lower and upper bound; and setting the threshold value to the first value.

12. The system of claim 11, wherein the first value is greater than a lower bound of the search window, further optionally, wherein a lower bound of the search window corresponds to a threshold value of a previous block of the image frame.

**Patentansprüche**

1. Verfahren (1000) zum Durchführen von Rate-Distortion-Optimierung von Bildkompensationsparametern, wobei die Kompensationsparameter verwendet werden, um visuelle Unvollkommenheiten in eine Anzeigevorrichtung zu reduzieren, wobei das Verfahren Folgendes umfasst:

Empfangen von Kompensationsparametern, die einem Block eines Bild-Frames entsprechen (1002), als Originaldaten; und
Identifizieren einer rekonstruierten Version der Originaldaten, die eine Kostenfunktion minimiert, wobei die einer bestimmten rekonstruierten Version der Originaldaten zugeordneten Kosten auf einer Verzerrung zwischen den Originaldaten und der bestimmten rekonstruierten Version der Originaldaten, einer der bestimmten rekonstruierten Version der Originaldaten zugeordneten Kodierrate und einer Fehler-Supremumsnorm zwischen den Originaldaten und der rekonstruierten Version (1004) basieren,
wobei, wenn die Fehler-Supremumsnorm zwischen den Originaldaten und der rekonstruierten Version größer als ein Schwellenwert ist, die der jeweiligen rekonstruierten Version der Originaldaten zugeordneten Kosten auf unendlich festgelegt werden.

2. Verfahren (1000) nach Anspruch 1, wobei die der bestimmten rekonstruierten Version der Originaldaten zugeordneten Kosten eine Summe aus der Verzerrung und einem Produkt aus einem ersten Lagrange-Parameter und der Kodierrate sowie einem Produkt aus einem zweiten Lagrange-Parameter und der Fehler-Supremumsnorm zwischen den Originaldaten und der bestimmten rekonstruierten Version der Originaldaten sind.

3. Verfahren (1000) zum Durchführen von Rate-Distortion-Optimierung nach Anspruch 1, wobei, wenn die Fehler-Supremumsnorm zwischen den Originaldaten und der bestimmten rekonstruierten Version der Originaldaten kleiner oder gleich dem Schwellenwert ist, die der bestimmten rekonstruierten Version der Originaldaten zugeordneten Kosten auf der der bestimmten rekonstruierten Version der Originaldaten zugeordneten Kodierrate und der Verzerrung zwischen den Originaldaten und der bestimmten rekonstruierten Version der Originaldaten basieren.

4. Verfahren (1000) nach Anspruch 3, wobei die der bestimmten rekonstruierten Version der Originaldaten zugeordneten Kosten eine Summe der Verzerrung und des Produkts eines Lagrange-Parameters und der Kodierrate sind.

5. Verfahren (1000) nach einem der Ansprüche 3 oder 4, das weiter ein Festlegen des Schwellenwerts durch Folgendes umfasst:

Durchsuchen eines Suchfensters nach einem ersten Wert, der größer oder gleich der Supremumsnorm des Fehlers ist, wobei das Suchfenster aufeinanderfolgende Wertereihen in aufsteigender Reihenfolge umfasst und eine untere und eine obere Grenze aufweist; und

Festlegen des Schwellenwerts auf den ersten Wert.

6. Verfahren (1000) nach Anspruch 5, wobei der erste Wert größer als eine Untergrenze des Suchfensters ist, wobei weiter die Untergrenze des Suchfensters optional einem Schwellenwert eines vorausgehenden Blocks des Bild-Frames entspricht.

7. Verfahren (1000) nach einem der Ansprüche 3 bis 6, wobei, wenn die Fehler-Supremumsnorm zwischen den Originaldaten und der bestimmten rekonstruierten Version der Originaldaten kleiner oder gleich dem Schwellenwert ist, ein maximaler absoluter Fehler der bestimmten rekonstruierten Version der Originaldaten verringert wird.

8. Encoder-System, umfassend:

einen Speicher, der computerausführbare Anweisungen speichert; und
einen Prozessor, der so konfiguriert ist, dass er die Anweisungen ausführt, die bewirken, dass das System Operationen durchführt, die Folgendes umfassen:

Empfangen von Originaldaten, die einem Block eines Bild-Frames entsprechen;
Identifizieren einer rekonstruierten Version der Originaldaten, die eine Kostenfunktion minimiert; und
wobei die einer bestimmten rekonstruierten Version der Originaldaten zugeordneten Kosten auf einer der bestimmten rekonstruierten Version der Originaldaten zugeordneten Kodierrate, einer Verzerrung zwischen den Originaldaten und der bestimmten rekonstruierten Version der Originaldaten und einer Fehler-Supremumsnorm zwischen den Originaldaten und der bestimmten rekonstruierten Version basieren,
wobei, wenn die Fehler-Supremumsnorm zwischen den Originaldaten und der rekonstruierten Version größer als ein Schwellenwert ist, die der jeweiligen rekonstruierten Version der Originaldaten zugeordneten Kosten auf unendlich festgelegt werden.

9. System nach Anspruch 8, wobei die der bestimmten rekonstruierten Version der Originaldaten zugeordneten Kosten eine Summe der Verzerrung und des Produkts eines Lagrange-Parameters und der Kodierrate sind.

10. System nach einem der Ansprüche 8 oder 9, das weiter einen Schwellenwertrechner umfasst, wobei der Prozessor weiter so konfiguriert ist, dass er die Anweisungen ausführt und bewirkt, dass der Schwellenwertrechner den Schwellenwert bestimmt.

11. System nach Anspruch 10, wobei der Schwellenwertrechner weiter so konfiguriert ist, dass er den Schwellenwert bestimmt durch:

Durchsuchen eines Suchfensters nach einem ersten Wert, der größer oder gleich der Supremumsnorm des Fehlers ist, wobei das Suchfenster eine Vielzahl von Werten in aufsteigender Reihenfolge umfasst und eine untere und eine obere Grenze aufweist; und
Festlegen des Schwellenwerts auf den ersten Wert.

12. System nach Anspruch 11, wobei der erste Wert größer ist eine Untergrenze des Suchfensters ist, wobei weiter eine Untergrenze des Suchfensters optional einem Schwellenwert eines vorausgehenden Blocks des Bild-Frames entspricht.

**Revendications**

1. Procédé (1000) permettant de réaliser une optimisation débit-distorsion de paramètres de compensation d'image, les paramètres de compensation étant utilisés pour réduire des imperfections visuelles d'un dispositif d'affichage, le procédé comprenant :

la réception, en tant que données originales, de paramètres de compensation correspondant à un bloc d'une trame d'image (1002) ; et
l'identification d'une version reconstruite des données originales qui réduit au minimum une fonction de coût, dans lequel un coût associé à une version reconstruite particulière des données originales est basé sur une distorsion entre les données originales et la version reconstruite particulière des données originales, un débit de codage associé à la version reconstruite particulière des données originales, et une norme d'erreur supérieure entre les données originales et la version reconstruite (1004),

dans lequel lorsque la norme d'erreur supérieure entre les données originales et la version reconstruite est supérieure à une valeur seuil, le coût associé à la version reconstruite particulière des données originales est fixé sur l'infini.

2. Procédé (1000) selon la revendication 1, dans lequel le coût associé à la version reconstruite particulière des données originales est une somme de la distorsion et d'un produit d'un premier paramètre lagrangien et du débit de codage, et d'un produit d'un second paramètre lagrangien et de la norme d'erreur supérieure entre les données originales et la version reconstruite particulière des données originales.

3. Procédé (1000) permettant de réaliser une optimisation débit-distorsion selon la revendication 1,
dans lequel lorsque la norme d'erreur supérieure entre les données originales et la version reconstruite particulière des données originales est inférieure ou égale à la valeur seuil, le coût associé à la version reconstruite particulière des données originales est basé sur le débit de codage associé à la version reconstruite particulière des données originales et la distorsion entre les données originales et la version reconstruite particulière des données originales.

4. Procédé (1000) selon la revendication 3, dans lequel le coût associé à la version reconstruite particulière des données originales est une somme de la distorsion et du produit d'un paramètre lagrangien et du débit de codage.

5. Procédé (1000) selon l'une quelconque des revendications 3 ou 4, comprenant en outre la fixation de la valeur seuil par :

recherche dans une fenêtre de recherche d'une première valeur qui est supérieure ou égale à la norme supérieure de l'erreur, la fenêtre de recherche comprenant des séries consécutives de valeurs dans un ordre croissant et présentant une limite inférieure et supérieure ; et
fixation de la valeur seuil sur la première valeur.

6. Procédé (1000) selon la revendication 5, dans lequel la première valeur est supérieure à une limite inférieure de la fenêtre de recherche, en outre, facultativement, dans lequel la limite inférieure de la fenêtre de recherche correspond à une valeur seuil d'un bloc précédent de la trame d'image.

7. Procédé (1000) selon l'une quelconque des revendications 3 à 6, dans lequel la norme d'erreur supérieure entre les données originales et la version reconstruite particulière des données originales qui est inférieure ou égale à la valeur seuil réduit une erreur absolue maximale de la version reconstruite particulière des données originales.

8. Système de codeur comprenant :

une mémoire stockant des instructions exécutables par ordinateur ; et
un processeur configuré pour exécuter les instructions qui amènent le système à réaliser des opérations comprenant :

la réception d'une donnée originale correspondant à un bloc d'une trame d'image ;
l'identification d'une version reconstruite des données originales qui réduit au minimum une fonction de coût ; et
dans lequel un coût associé à une version reconstruite particulière des données originales est basé sur un débit de codage associé à la version reconstruite particulière des données originales, une distorsion entre les données originales et la version reconstruite particulière des données originales, et une norme d'erreur supérieure entre les données originales et la version reconstruite particulière,
dans lequel lorsque la norme d'erreur supérieure entre les données originales et la version reconstruite est supérieure à une valeur seuil, le coût associé à la version reconstruite particulière des données originales est fixé sur l'infini.

9. Système selon la revendication 8, dans lequel le coût associé à la version reconstruite particulière des données originales est une somme de la distorsion et du produit d'un paramètre lagrangien et du débit de codage.

10. Système selon l'une quelconque des revendications 8 ou 9, comprenant en outre un calculateur de seuil, dans lequel

13

le processeur est en outre configuré pour exécuter les instructions et amener le calculateur de seuil à déterminer la valeur seuil.

11. Système selon la revendication 10, dans lequel le calculateur de seuil est en outre configuré pour déterminer la valeur seuil par :

recherche dans une fenêtre de recherche d'une première valeur qui est supérieure ou égale à la norme supérieure de l'erreur, la fenêtre de recherche comprenant une pluralité de valeurs dans un ordre croissant et présentant une limite inférieure et supérieure ; et
fixation de la valeur seuil sur la première valeur.

12. Système selon la revendication 11, dans lequel la première valeur est supérieure à une limite inférieure de la fenêtre de recherche, en outre, facultativement, dans lequel une limite inférieure de la fenêtre de recherche correspond à une valeur seuil d'un bloc précédent de la trame d'image.

# FIG. 1

$\check{I}$ → ENCODER (102) → DECODER (104) → $\hat{I}$

# FIG. 2

MURA COMPENSATION WITHOUT COMPRESSION

REAL TIME

202 IMAGE → MURA COMPENSATION (206) → COMPENSATED IMAGE → 208 → 210

204 COMPENSATION PARAMETERS → MEMORY (214)

EP 4 027 643 B1

# FIG. 3

MURA COMPENSATION WITH COMPRESSION

REAL TIME

306

MURA COMPENSATION

IMAGE

COMPENSATED IMAGE

308

310

302

$\hat{I}$

316

DECODER (IN RTL)

304

312

$I$

ENCODER (OFFLINE)

314

COMPENSATION PARAMETERS

COMPRESSED PARAMETERS IN MEMORY

EP 4 027 643 B1

FIG. 4

EP 4 027 643 B1

## FIG. 5

# FIG. 6

EP 4 027 643 B1

EP 4 027 643 B1

# FIG. 7

## FIG. 8

START WITH $\mathcal{T}=1$

802

$\mathcal{T}=1$ FAILED
TRY $\mathcal{T}=2$

808

$\Rightarrow$

▨ $\left\|E\right\|_{\infty} \leq 1$ SATISFIED

▨ $\left\|E\right\|_{\infty} \leq 1$ NOT SATISFIED

CHECK $\mathcal{T}=2$

804

$\mathcal{T}=2$ FAILED
TRY $\mathcal{T}=3$

810

$\Rightarrow$

▨ $\left\|E\right\|_{\infty} \leq 2$ SATISFIED

▨ $\left\|E\right\|_{\infty} \leq 2$ NOT SATISFIED

CHECK $\mathcal{T}=3$

806

$\Rightarrow$

▨ $\left\|E\right\|_{\infty} \leq 3$ SATISFIED

## FIG. 9

900

902
RECEIVE AN ORIGINAL DATA CORRESPONDING TO A BLOCK OF AN IMAGE FRAME

904
IDENTIFY A RECONSTRUCTED VERSION OF THE ORIGINAL DATA THAT MINIMIZES A COST FUNCTION, WHEREIN THE COST ASSOCIATED WITH A PARTICULAR RECONSTRUCTED VERSION OF THE ORIGINAL DATA IS BASED ON AN ENCODING RATE ASSOCIATED WITH THE PARTICULAR RECONSTRUCTED VERSION OF THE ORIGINAL DATA, AND A DISTORTION BETWEEN THE ORIGINAL DATA AND THE PARTICULAR RECONSTRUCTED VERSION OF THE ORIGINAL DATA IN RESPONSE TO A SUPREMUM NORM OF ERROR BETWEEN THE ORIGINAL DATA AND THE PARTICULAR RECONSTRUCTED VERSION OF THE ORIGINAL DATA BEING LESS THAN OR EQUAL TO A THRESHOLD VALUE.

906
SET THE THRESHOLD VALUE TO A SECOND THRESHOLD VALUE IN RESPONSE TO THE SECOND SUPREMUM NORM OF ERROR BETWEEN THE ORIGINAL DATA AND THE SECOND PARTICULAR RECONSTRUCTED VERSION OF THE ORIGINAL DATA BEING GREATER THAN THE THRESHOLD VALUE.

908
SEARCH A SEARCH WINDOW FOR A FIRST VALUE THAT IS GREATER THAN OR EQUAL TO THE SUPREMUM NORM OF THE ERROR

910
SET THE THRESHOLD VALUE TO THE FIRST VALUE

EP 4 027 643 B1

## FIG. 10

1000

1002

RECEIVE AN ORIGINAL DATA CORRESPONDING TO A BLOCK OF AN IMAGE FRAME

1004

IDENTIFY A RECONSTRUCTED VERSION OF THE ORIGINAL DATA THAT MINIMIZES A COST FUNCTION, WHEREIN THE COST ASSOCIATED WITH A PARTICULAR RECONSTRUCTED VERSION OF THE ORIGINAL DATA IS BASED ON A DISTORTION BETWEEN THE ORIGINAL DATA AND THE PARTICULAR RECONSTRUCTED VERSION OF THE ORIGINAL DATA, AN ENCODING RATE ASSOCIATED WITH THE PARTICULAR RECONSTRUCTED VERSION OF THE ORIGINAL DATA, AND A SUPREMUM NORM OF ERROR BETWEEN THE ORIGINAL DATA AND THE PARTICULAR RECONSTRUCTED VERSION.

EP 4 027 643 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9743860 A
- US 20180191371 A
- WO 2019185992 A
- US 9866853 B

**Non-patent literature cited in the description**

- **E. RICHARDSON**. The H.264 Advanced Video Compression Standard. Wiley Publishing, 2010